# EUROPEAN PATENT APPLICATION

(11) **EP 2 367 113 A1**
(43) Date of publication of application: **21.09.2011**
(21) Application number: 11002033.6
(22) Date of filing: 11.03.2011
(51) Int. Cl.: G06F 11/36

(54) **System and method for the detection of usability problems in an interactive application**

(30) Priority: 15.03.2010 IL 20450810
(71) Applicant: Deutsche Telekom AG, 53113 Bonn (DE)
(72) Inventor: Schclar, Alon, Holon 58268 (IL); Rokach, Lior, Omer 84965 (IL); Shapira, Bracha, Beer Sheva 84728 (IL); Glass, Gregor, Berlin 10781 (DE); Jepsen, Kathrin, Berlin 12205 (DE); Henke, Katja, Berlin 12159 (DE)
(74) Representative: Flaccus, Rolf-Dieter

(57) **Abstract**

In one aspect the invention is directed to detecting usability problems in an application running at a user device, which comprises at the user device: a) a predefined model of the application in a form of a directed graph, wherein each node of the graph represents one screen of the application, wherein one or more starting screens *B* and one or more Goal screens *G* are also respectively indicated in said graph, and wherein each arrow in the graph represents a transfer between two screens via a Screen Input Element (SIE) such as a "next" button; and b) A sequence monitoring unit activated each time that a user enters a *B* screen, said sequence monitoring unit follows the user progress by means of said *SIEs* through various application screens, and upon termination of the application prior to reaching a Goal screen or SIE *G* (SIE *G* defines a transfer to a goal screen), the unit stores for a future usability analysis in a first memory storage at least the index of the final screen at which said termination occurred.

## Description

### Field of the Invention

The present invention relates to the field of usability of interactive software applications. More particularly, the present invention detects locations in software applications that are suspected as causing usability problems.

### Background of the Invention

Recent years have brought with them a tough competition between digital devices providers. Marketing of digital devices to costumers is mostly based on the variety of the applications supported by each device. Even more than the hunger of costumers to new stimulating applications, operators and service providers share a strong desire that costumers will exploit the applications provided by them. The profit of operators and service providers is directly proportional to the frequency of using their applications. Thus, a drop in usage percentage generally results in a drop in profits.

The quality of an application is often determined by the customers. Typically, the quality of an application is evaluated in terms of well built, long-lasting, and defect free. While these are critical components for the evaluation of quality, it is important to realize that if a customer considers a product as difficult to use or not "friendly", he will most likely not use it enough to find out how well it is built, or to explore all the options that it provides. Even in cases where customers do not have the choice of using a specific application or not, there are still many reasons for making the application as usable as possible. A term which is often used to describe the quality of a product from the user's perspective, particularly with respect to computer products, is the term "user friendly".

A broader term which is often used to evaluate the convenience of use of a system, a product or a software application is "usability". Usability problems, as referred herein, quantify the user interaction with an application or a system.

The evaluation of the usability of an application therefore requires a comprehensive, quantitative, and objective assessment of all the aspects of the application, the whole system performance, or in other term, said evaluation should provide a measurement that can determine and represent how well a product performs from the user perspective.

Heretofore, there have been no quantitative, objective, and unsupervised system and method for detecting problems in the usability of a digital interactive system (for example, a cellular phone). For instance, with many interactive software applications (such as an application for purchasing goods through the Internet, or an email client application on a mobile phone), the "user friendliness" is determined in terms of the "look and feel" of the application user interfaces, the "intuitiveness" of executing certain of the application tasks, the logical organization of pull-down menus, etc. Quantitative "benchmark" tests for software applications are generally used to measure processing power, such as the time to complete various tasks of the application while using different software components. Such benchmark tests, however, focus on the processing power, and not on usability.

The detection of usability problems can provide many new and useful means for enhancing the usability itself. Improvements to the usability are generally translated to reduction of costs, increase of quality and performance, and higher user satisfaction. Of course, there is a perception that quality always costs more. In fact, while the production of a higher quality product may require an additional initial investment, the costs are generally reduced over the long term. In many cases, improvements to usability quickly lead to cost savings in several key areas, as they help increase of user satisfaction, reduction of errors, and increase of user productivity. Simply stated, many cost, quality, and satisfaction benefits can be expected by the early detection of usability problems, and making product modifications to improve points of weaknesses in software applications.

Therefore, the providing of a quantitive, unsupervised method for the detection of usability and friendliness problems in user applications is highly desirable, as such unsupervised method can reduce the provider expanses on customer-support, can speed-up the detection of software bugs (when exist) in a user application, and can increase users satisfaction. The art has so far failed to provide such a quantitative method that detects usability problems in interactive software.

It is an object of the present invention to provide method and system for the detection of usability problems in software applications.

It is another object of the present invention to provide method and system method that can guide to the determination of specific reasons that cause usability problems.

It is another object of the present invention to provide such method and system for detecting usability problems, which are quantitative.

It is yet another object of the present invention to provide method and system for detecting design flaws in software applications, at the user end.

It is yet another object of the present invention to provide method and system for the detection of cumbersome flows for performing tasks in interactive software applications.

It is yet another object of the present invention to provide a method which is unsupervised.

Other objects and advantages of the invention will become apparent as the description proceeds.

### Summary of the Invention

In one aspect the invention is directed to detecting usability problems in an application running at a user device, which comprises at the user device: a) a predefined model of the application in a form of a directed graph, wherein each node of the graph represents one screen of the application, wherein one or more starting screens *B* and one or more Goal screens *G* are also respectively indicated in said graph, and wherein each arrow in the graph represents a transfer between two screens via a Screen Input Element (SIE) such as a "next" button; and b) A sequence monitoring unit activated each time that a user enters a *B* screen, said sequence monitoring unit follows the user progress by means of said *SIEs* through various application screens, and upon termination of the application prior to reaching a Goal screen or SIE *G* (SIE *G* defines a transfer to a goal screen), the unit stores for a future usability analysis in a first memory storage at least the index of the final screen at which said termination occurred.

In one embodiment of the invention upon termination of the application prior to reaching a Goal or SIE *G*, the monitoring unit stores in said first memory storage the index of the last application screen at the time of termination and the indices of predefined number of screen that preceded said last application screen.

The indices of said predefined number of screen are stored in terms of the *SIE* between each pair of screens.

The invention further determining non-optimized use of the application, which further comprises: a) a second memory storage which comprises indications of one or more optimal sequences from a starting screen *B* to the Goal screen *G*; b) and wherein upon real time execution of the application by the user, said sequence monitoring unit compares between the real time sequence and said one or more optimal sequences, and if no match is found, storing in said first memory the real time sequence, as executed by the user either when the user arrives at the Goal screen, or not (i.e. the task is not completed), for further analysis as to whether the application contains a usability problem.

In one aspect the invention the first memory comprises an initial list of all the application screens indices, and wherein the sequence monitoring unit further deletes from said first memory each screen that the user visits above a threshold number of times, and wherein the remaining unvisited screens that are left after some period of time are used for usability analysis.

The first memory further comprises revisited screens which followed by an error message and cases of 'back navigation' in which the user goes through several screens and than goes back to preceding screens.

The invention further encompasses a central server for collecting the contents of a plurality of first memory storages from a plurality of user devices respectively, storing the accumulated contents in a server memory, and using the accumulated data as a statistical basis for usability analysis.

### Brief Description of the Drawings

In the drawings:
- Fig. 1 illustrates an application model according to an embodiment of the invention;
- Fig. 2 shows a system 100 for determining usability problems according to an embodiment of the present invention; and
- Fig. 3 shows a central server 101 which communicates and collects usability data from plurality of user devices.

### Detailed Description of the Invention

The present invention provides means for determining usability points of weakness in an interactive software package. A software package, of a mobile device is the whole user software for operating the mobile device. The software package comprises several applications, for example an email application, SMS application, a configuration application for configuring the device, etc. Usability points of weakness are defined herein as those screens presented to the user that cause usability problems. Those screens will be referred hereinafter as "usability failure points", although the "failure" according to the present invention mostly evolves from lack of "friendliness" of the application.

Although the present invention is particularly useful in software packages of mobile devices, the invention can be used as well to find failure points in software packages of stationary devices.

When a user invokes an application on a cellular phone, he usually has a task in mind that he wishes to complete - for example, sending an instant message or adding a contact to the phone contact list. In order to perform the task, the user interactively goes through a series of screens until the task is completed. Every screen is composed of *Screen Input Elements* (*SIE*) - some of which are used for data input, while others advance the user to other screens.

An *activity-path* is the sequence of screens that the user goes through along with the screen input elements that were used for inter-screen transitions.

If the design of the screens and the screen-flow in a mobile phone application is flawed (e.g., not intuitive for the average user), most users will give up using the application due to the difficulties in its operation. Eventually, this will result in low usage of the application module and a drop in the profits of the cellular operator from the operation of the application.

According to the present invention, each application is modelled. Each application may include performance of several functions, wherein each function generally ends with a Goal screen or SIE. A Goal SIE in an SMS application is, for example, the "send" SIE. Another example for a Goal is the screen "sending the message" in an SMS application. An application may include several flows that end with one Goal, or several flows that end with several Goals. For the sake of brevity, the following description will assume that an application comprises one starting screen (starting point) and one Goal (end point). The starting point of an application is generally the opening screen the application.

One type of usability failure is the case where the user begins an activity flow, but does not reach the Goal.

According to the present invention, an application model is built in a form of a directed graph. Each node in the directed graph indicates a specific screen, and each arrow in the graph a possible interactive transfer from one screen to a next one. More specifically, the application model is a schematic description which describes all the possible interactive flows possible for execution from the starting point of the application and until reaching the Goal. An element (of a menu, for example) appearing on the device screen by which the user can interact with the application is defined as a Screen Input Element (*SIE*). The last screen or *SIE* which finalizes the execution of a task, for example a final *confirm SIE* in an application for purchasing goods, or a *send SIE* in an email or SMS applications are defined as a Goal.

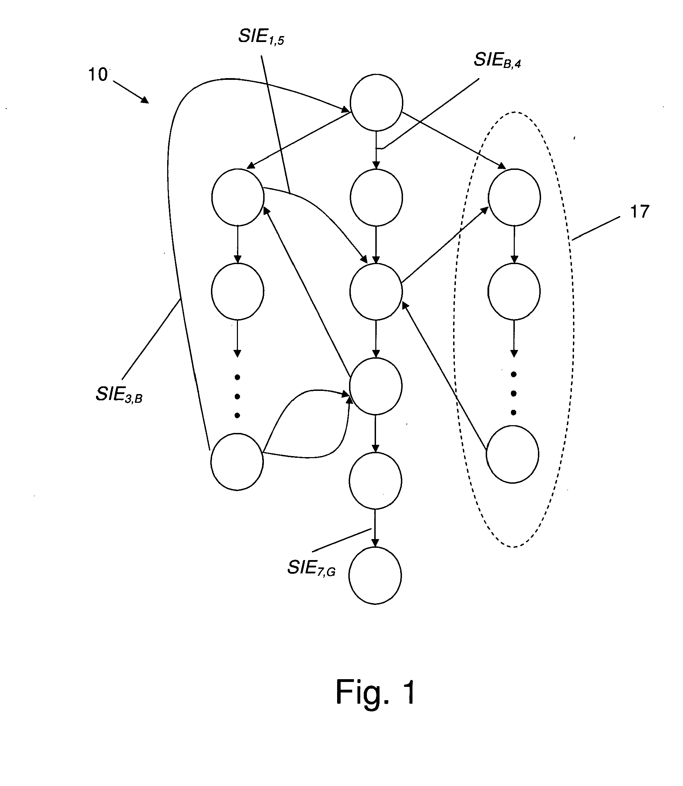

Fig. 1 shows an exemplary application model 10. Screen ***B*** is the starting screen of the application, screen G is the last screen presented when executing a task, and other nodes represent additional screens that are available and may appear during the execution of the application. The arrows between the screens of the model correspond to *SIEs* that are used for inter screen transitions. For example, ***SIE**_{1,5}* indicates the screen input element which enables the transition from screen *S₁* to screen *S₅. **SIE**_{B,4}* indicates the screen input element which enables the transition from screen ***B*** to screen *S₄. **SIE**_{7,G}* indicates the screen input element which enables the transition from screen *S₇* to the Goal screen ***G**. **SIE**_{3,B}* indicates the Goal screen input element which enables the transition from screen ***S**₃* to screen ***B***. The right branch 17 of the graph 10 represents a subFlow of the application. For example, if application 10 is an SMS application, it may have a subFlow *S₈-S₁₀* enabling spell checking of the SMS content. After the user types the SMS content in screen *S₅,* the user activates the spell check by means of *SIE_{5,8}* and after completing the spell check in screen *S₁₀* the user returns to screen *S₅* by means of *SIE_{10,5}.* Another SMS application example is "add contact" in which the user adds a contact to the phone book as part of the SMS construction.

The application model generally includes:
1. All the various screens of the application, wherein each screen receives a unique index (hereinafter the "screen index"), for example, in a form of *S₁₆.* In some cases, a more complicated index may be applied, such as *S_{7·16},* meaning the 16^{th} screen of application number 7 (however, as noted, for the sake of brevity the following description assumes use of only one application).
2. One or more starting screens *B;*
3. One or more *Goal* screens *G;*
4. Various *SIEs,* each describing a possible transfer from one screen to a next one;

In some cases, there is one preferred flow for executing a task. For example, the task of application 10 may optimally be performed by starting at start screen *B*, going through screens *S₄ S₅ S₆, S₇,* and ending at screen *G*. The use of the spell check flow *S₈- S₁₀,* may also be considered "acceptable", as long as a return to screen *S₅* is made, thereby to continue with the flow *S_{6,} S_{7,}* and ending at screen *S_{G}.* However, the use of the flow *S₁ - S₃* may be considered as suboptimal. As will be demonstrated, the present invention detects and records, among others, all the cases in which a user task has started at screen *B* but the task has not ended at screen *G*. Furthermore, the system of the invention can likewise enable determination of cases in which sub-optimal flows have been used during the application execution. All said recorded cases are then used for determining usability problems.

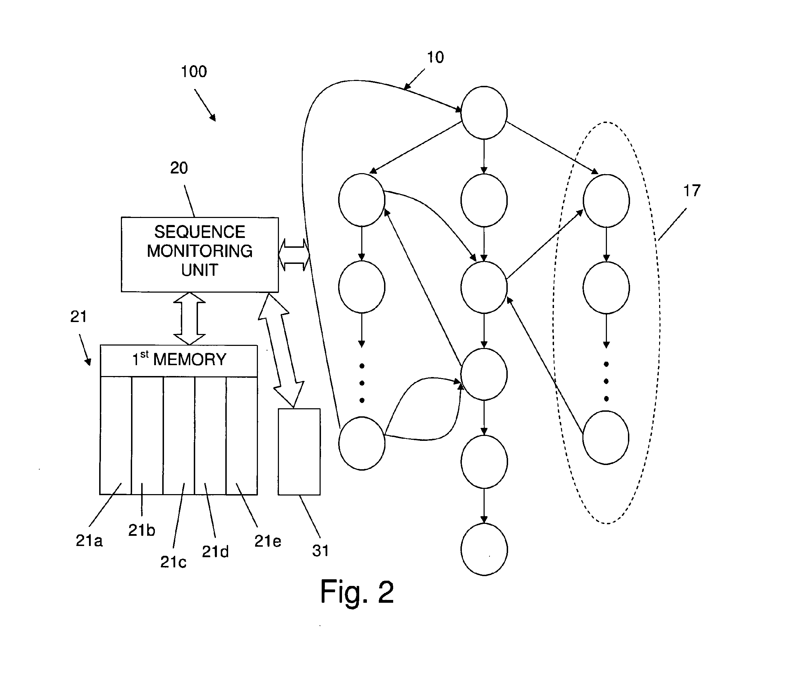

Fig. 2 shows a system 100 for determining usability problems according to an embodiment of the present invention. The system comprises the application model 10 (or a portion thereof), and a sequence monitoring unit 20 (hereinafter *SMU*)*.* The *SMU* records in real time the sequence of screens that the user goes through during the execution of the application. The *SMU* activates a new recording of a screens sequence at the time of entering of the user into a *B* screen. The *SMU* monitors the user progressing towards the Goal screen *G*. If the user reaches the *G* screen, it is assumed that there is no usability problem, the sequence is ignored, and the *SMU* waits for a new entrance of the user into the *B* screen. However, if during the application execution the user cancels and returns to the *B* screen, or even to a screen above the *B* screen (i.e., to a menu in which the specific application is selected), an information regarding the activity path of user, for example, the index of the last screen at which the user has pressed "cancel" (or any other button that terminates the application execution), is saved in first memory 21.

In a first embodiment of the invention, an indication of the very last screen at which the termination has occurred is saved in first memory 21. For example, at the first time at which the user has terminated at screen *S₆,* a counter *S₆* is created in the first memory 21 with a value of "1". Next time that the user terminates at a same screen *S₆,* the memory counter for *S₆* is incremented. In such a manner, a counter for each screen in which the user has encountered an assumed usability problem is produced in first memory 21, and this counter counts the number of times in which a termination was intentionally made or occurred in that specific screen. Storage 21a of first memory 21 contains said counters for the various "last screen in which a termination was made" occurrences.

There are known cases in which the usability problem which has caused the user to terminate (either intentionally or due to improper use) exists not in the last screen in which he terminated, but in the preceding screens. Therefore, in a second embodiment of the invention a counter is produced for a predefined number of last screens that preceded the termination. For example, when the predefined number of last screens is set to be two, instead of the counter indication for the last screen, a counter indication for the last pair of screens (or only for the screen that preceded the last screen) is created and maintained in the memory. Storage 21b contains said counters for the various "pair of screens in which a termination was made" (or the screen that preceded the last screen).

In still another aspect of the invention, an existence of a usability problem may be concluded from the knowledge of unvisited screen (i.e., screens that are not visited at all by the user, or those that are only very rarely visited). Therefore, in still a third embodiment of the invention a list is created which initially includes all the various screens of the application. Each screen which is visited (once, or a threshold number of times) by the user is deleted from the list. After some time (for example, after 3 months) only the screens that were not visited at least a threshold number of times by the user remain in the list. Therefore, this list provides another aspect relating to screens that may include usability problems. This list is indicated as storage 21c in Fig. 2.

Another type of usability problem may cause the user to arrive at the Goal screen, but not in an optimal route (for example, not going through the least number of screens, as is most preferred). According to still a fourth embodiment of the invention one or more screen sequences that are considered by the operator to be "optimal" are pre-recorded and stored for comparison in a second storage 31. In that case, each time the user activates the application, the sequence monitoring unit follows and records the full sequence of screens that the user has gone through, and stores the same at the memory storage 21d. At the end, either when the user arrives at the Goal screen, or not (i.e. the task is not completed), the recorded sequence screens is compared with the "optimal" or sequences as listed in second memory 31. If the user sequence matches one of the "optimal" sequences in second memory 31, the recorded sequence is deleted from memory 21d. If, on the other hand, the recorded sequence does not match any of the "optimal" sequences in second memory 31, the list is remained stored in memory 21d for future verification as to whether the non-optimal sequence by the user evolves from a usability problem. In another alternative, the comparison between storages 21d and 31 may be made in terms of sequences of *SIEs,* rather than sequences of the screens themselves (for example, a present sequence of *SIE_{b,4}, SIE_{4,5}, SIE_{5,8}, SIE_{8,9,} SIE_{9,10}, SIE_{10,5},...* etc. may be used in the comparison). After some period of time, for example, 3 months, the storage 21d contains full and partial sequences that the user has used, that are not "optimal" (as said, the sequence may be indicated in terms of lists of sequences of screens or *SIEs).*

In still another embodiment of the invention, each revisited screen (or a pair of last revisited screens) which is followed by an error message is stored in memory storage 21e. Cases of 'back navigation' in which the user goes through several screens and than goes back to preceding screens (i.e. *S*i -> *S*k -> *S*i) are also stored in memory storage 21e.

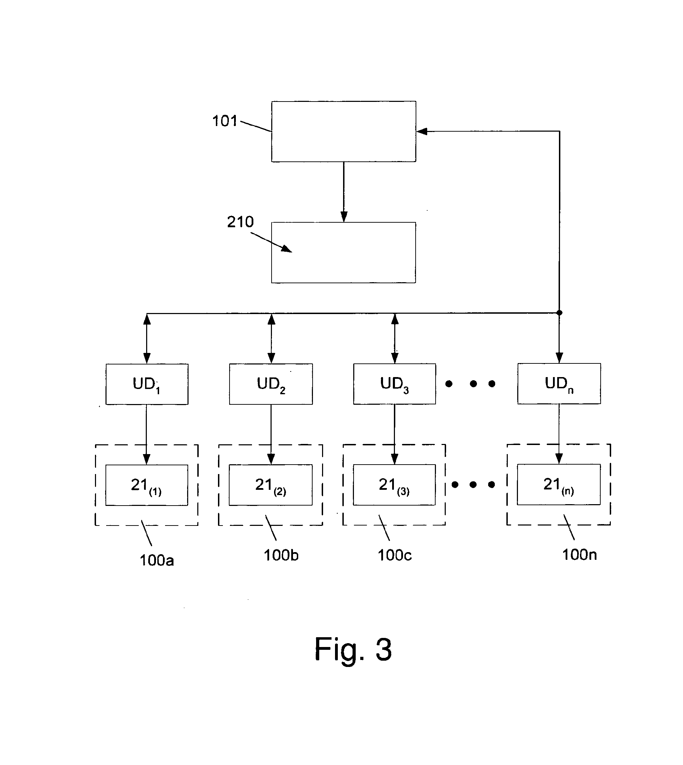

In order to form a reliable statistical basis, it is advisable to apply the system 100 of the invention in as many as possible user devices (which may be stationary or mobile). Fig. 3 shows a central server 101 which communicates from time to time with a plurality of user devices at which system 100 is installed. A central server extracts from time to time the contents of first memory 21 from each of the plurality of users, and stores that accumulated data in its server memory 210. Having server memory 210, an analysis on all the accumulated data is performed in order to determine and conclude about the possible existence of usability problems.

While some embodiments of the invention have been described by way of illustration, it will be apparent that the invention can be carried out with many modifications, variations and adaptations, and with the use of numerous equivalents or alternative solutions that are within the scope of persons skilled in the art, without departing from the spirit of the invention or exceeding the scope of the claims.

## Claims

1. System for detecting usability problems in an application running at a user device, which comprises at the user device:
a. a predefined model of the application in a form of a directed graph, wherein each node of the graph represents one screen of the application, wherein one or more starting screens *B* and one or more Goal screens *G* are also respectively indicated in said graph, and wherein each arrow in the graph represents an *SIE* transfer between two screens; and
b. A sequence monitoring unit activated each time that a user enters a *B* screen, said sequence monitoring unit follows the user progress by means of said *SIEs* through various application screens, and upon termination of the application prior to reaching a Goal screen or SIE *G*, the unit stores for a future usability analysis in first memory storage at least the index of the final screen at which said termination occurred.

2. System according to claim 1, wherein upon termination of the application prior to reaching a Goal or SIE *G*, the monitoring unit stores in said first memory storage the index of the last application screen at the time of termination and the indices of predefined number of screen that preceded said last application screen.

3. System according to claim 2, wherein the indices of said predefined number of screen are stored in terms of the *SIE* between each pair of screens.

4. System according to claim 1, for further determining non-optimized use of the application, which further comprises:
a. a second memory storage which comprises indications of one or more optimal sequences from a starting screen *B* to the Goal screen *G*;
b. and wherein upon real time execution of the application by the user, said sequence monitoring unit compares between the real time sequence and said one or more optimal sequences, and if no match is found, storing in said first memory the real time sequence, as executed by the user either when the user arrives at the Goal screen, or not (i.e. the task is not completed), for further analysis as to whether the application contains a usability problem.

5. System according to claim 1, wherein the first memory comprises an initial list of all the application screens indices, and wherein the sequence monitoring unit further deletes from said first memory each screen that the user visits above a threshold number of times, and wherein the remaining unvisited screens that are left after some period of time are used for usability analysis.

6. System according to claim 1, wherein the first memory further comprises revisited screens which followed by an error message and cases of 'back navigation' in which the user goes through several screens and than goes back to preceding screens.

7. System according to claim 1, further comprising a central server for collecting the contents of a plurality of first memory storages from a plurality of user devices respectively, storing the accumulated contents in a server memory, and using the accumulated data as a statistical basis for usability analysis.
